# EUROPEAN PATENT APPLICATION

(11) **EP 4 832 215 A1**
(43) Date of publication of application: **28.10.2026**
(21) Application number: 24928039.7
(22) Date of filing: 28.08.2024
(51) Int. Cl.: H01M 50/342

(54) **BATTERY, BATTERY PACK, ELECTRIC DEVICE AND BATTERY MODULE**

(30) Priority: 06.03.2024 CN 202410254427
(71) Applicant: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); YAO, Pengcheng, Ningde, Fujian 352100 (CN)
(74) Representative: Straus, Alexander
(86) International application number: PCT/CN2024/115181
(87) International publication number: WO 2025/185108

(57) **Abstract**

A battery (100), a battery pack, an electric device, and a battery module, which belong to the technical field of batteries. The battery (100) comprises a wrapping structure (1), a conductive terminal (2), and battery cells (3), wherein an accommodating space (11) is formed in the wrapping structure (1); a pressure relief port (12) in communication with the accommodating space (11) is formed in one side of the wrapping structure (1); and the remaining part of the wrapping structure (1) is of a sealed structure. The conductive terminal (2) is connected to the wrapping structure (1), and the conductive terminal (2) and the pressure relief port (12) are located on different sides of the wrapping structure (1). The battery cells (3) are located in the accommodating space (11), and tabs (31) of the battery cells (3) are electrically connected to the conductive terminal (2). By means of the wrapping structure (1), a thermal runaway gas in the accommodating space (11) is guided to be ejected through the pressure relief port (12), thereby achieving the directional ejection of the thermal runaway gas in the accommodating space (11) of the battery (100). The conductive terminal (2) and the pressure relief port (12) are located on different sides of the wrapping structure (1), such that the thermal runaway gas ejected through the pressure relief port (12) can be directed as far away as possible from the conductive terminal (2).

## Description

### CROSS-REFERENCE TO RELATED APPLICATIONS

This disclosure claims priority to Chinese Patent Application No. 202410254427.8, filed on March 06, 2024 and entitled "BATTERY, BATTERY PACK, ELECTRIC APPARATUS, AND BATTERY MODULE", which is incorporated herein by reference in its entirety.

### TECHNICAL FIELD

This disclosure relates to the field of battery technologies, and in particular, to a battery, a battery pack, an electric apparatus, and a battery module.

### BACKGROUND

New energy batteries are becoming more and more widespread in the life and industries. For example, new energy vehicles equipped with batteries have been widely used. In addition, batteries are being increasingly applied in fields such as energy storage.

In the related art, when thermal runaway occurs in a battery, thermal runaway gas of the battery is ejected in all directions which are uncertain.

### SUMMARY

To resolve the foregoing technical problem, this disclosure provides a battery, a battery pack, an electric apparatus, and a battery module, so that gas is ejected in a preset direction when thermal runaway occurs in the battery.

This disclosure is implemented using the following technical solutions.

A first aspect of embodiments of this disclosure provides a battery, including:
a wrapping structure forming an accommodating space, a side of the wrapping structure forming a pressure relief opening communicating with the accommodating space, and the rest of the wrapping structure being a sealing structure;
a conductive terminal connected to the wrapping structure, the conductive terminal and the pressure relief opening being located on different sides of the wrapping structure; and
a battery cell located in the accommodating space, a tab of the battery cell being electrically connected to the conductive terminal.

In the embodiments of this disclosure, the wrapping structure guides thermal runaway gas in the accommodating space to be directionally ejected from the pressure relief opening. Since the conductive terminal and the pressure relief opening are located on different sides of the wrapping structure, the thermal runaway gas ejected from the pressure relief opening and substances carried by the thermal runaway gas can be kept as far away as possible from the conductive terminal.

In one embodiment, the battery cell is provided in a quantity of at least two, and the conductive terminal includes a sampling electrode and at least two adapting electrodes, where one adapting electrode is electrically connected to a tab of one battery cell, the other adapting electrode is electrically connected to a tab of the other battery cell, the tabs corresponding to the two adapting electrodes having opposite polarities, and the sampling electrode is electrically connected to the tabs of the two corresponding battery cells separately, the tabs of the two corresponding battery cells electrically connected to the sampling electrode having opposite polarities.

In this embodiment of this disclosure, the battery cells in the battery are powered or charged through at least two adapting electrodes, and the battery cells in the battery are connected in series through the sampling electrode. The operating state of the corresponding battery cell can be monitored by measuring the voltage between the sampling electrode and the corresponding adapting electrode. The adapting electrodes for inputting and outputting electrical energy and the sampling electrode for monitoring are both located on different sides of the wrapping structure relative to the pressure relief opening.

In one embodiment, the conductive terminal and the pressure relief opening are located on two opposite sides of the wrapping structure respectively.

In this embodiment of this disclosure, the conductive terminal and the pressure relief opening are located on two opposite sides of the wrapping structure respectively, such that the conductive terminal can be kept away from the pressure relief opening.

In one embodiment, the battery further includes a flame-retardant cover covering the pressure relief opening, a pressure bearing capacity of the wrapping structure being greater than that of the flame-retardant cover.

In this embodiment of this disclosure, the coverage of the flame-retardant cover reduces the impact on the battery cells in the accommodating space of the wrapping structure when thermal runaway occurs in an adjacent battery.

In one embodiment, the flame-retardant cover is made of mica.

In this embodiment of this disclosure, the mica material prevents the flame-retardant cover from being ignited as much as possible in the case of thermal runaway.

In one embodiment, an indentation is formed on the flame-retardant cover.

In this embodiment of this disclosure, the pressure bearing capacity of the flame-retardant cover is reduced, which is conducive to pressure relief of the thermal runaway gas.

In one embodiment, the flame-retardant cover forms a through hole communicating with the accommodating space, and the battery further includes a temperature regulating container partially located in the accommodating space, where one side or two opposite sides of the temperature regulating container are provided with the battery cell, the temperature regulating container has a temperature regulating cavity and an inlet and an outlet communicating with the temperature regulating cavity separately, and the temperature regulating container passes through the through hole such that the inlet and the outlet are both exposed outside the accommodating space along a side of the wrapping structure facing the flame-retardant cover.

In this embodiment of this disclosure, the temperature regulating container extends out of the through hole, such that the inlet and outlet of the temperature regulating container are exposed, facilitating the connection of an external fluid to the temperature regulating container.

In one embodiment, ignition points of the flame-retardant cover and the wrapping structure are both greater than or equal to 800°C.

In this embodiment of this disclosure, the high ignition point makes the flame-retardant cover and the wrapping structure less likely to be ignited.

In one embodiment, the wrapping structure includes:
a housing, where the pressure relief opening is formed on a side of the housing; and
a top cover, where the top cover and the housing enclose an accommodating space, and the conductive terminal is mounted on the top cover.

In this embodiment of this disclosure, before the battery cell is disposed inside the housing, the tab of the battery cell can be conveniently connected to the conductive terminal of the top cover.

In one embodiment, the top cover has a flange covering a side wall of the housing, and a gap between the flange and the side wall of the housing is less than or equal to 0.5 mm.

In this embodiment of this disclosure, in the case of incomplete sealing, the resistance to the ejection of the thermal runaway gas between the flange and the side wall of the housing is increased, guiding the thermal runaway gas to be ejected from the pressure relief opening.

In one embodiment, the housing includes a plurality of sequentially bent bending plates, bending plates on two circumferential ends of the battery cell are connected, the plurality of bending plates enclose the pressure relief opening, the top cover and the pressure relief opening are located on two opposite sides of the housing respectively, the top cover and the plurality of bending plates enclose the accommodating space, and the wrapping structure further includes an insulating layer, the insulating layer covering an inner surface of the housing.

In this embodiment of this disclosure, the insulating layer can be mounted on the housing in the unfolded state, making the mounting of the insulating layer relatively convenient.

In one embodiment, the housing is made of metal, and the battery further includes a reinforcing plate, where the reinforcing plate is located on the inner surface of the housing, the bending plates on two circumferential ends of the battery cell are connected by welding, a position at which the bending plates on two circumferential ends of the battery cell are welded is a target position, and the reinforcing plate is welded to the housing at the target position.

In this embodiment of this disclosure, the support of the reinforcing plate prevents the bending plates at two ends from being welded through.

In one embodiment, the housing is made of metal, and thickness of the housing is 0.1 mm to 1 mm.

In this embodiment of this disclosure, the metal housing has relatively appropriate thickness, which can reduce the weight of the housing as much as possible while sufficient pressure bearing capacity is ensured.

In one embodiment, the housing is made of plastic, the housing is an integrally formed structure, and thickness of the housing is 1 mm to 3 mm.

In this embodiment of this disclosure, the plastic housing has relatively appropriate thickness, which can reduce the weight of the housing as much as possible while sufficient pressure bearing capacity is ensured.

In one embodiment, the top cover is made of plastic, and the housing is made of metal or plastic.

In one embodiment, the battery cell is a pouch battery cell.

A second aspect of the embodiments of this disclosure provides a battery pack, including:
a box; and
any one of the foregoing batteries, where the battery is located in the box.

In one embodiment, the battery in the box is provided in a quantity of at least two, at least two of the batteries are sequentially arranged, conductive terminals of the at least two sequentially arranged batteries have the same orientation, and the orientation of the conductive terminals of the at least two sequentially arranged batteries is arranged crosswise relative to a direction in which the at least two batteries are sequentially arranged.

In this embodiment of this disclosure, in the at least two sequentially arranged batteries, the pressure relief opening of each battery can avoid the conductive terminal of each battery as much as possible, such that the thermal runaway gas ejected from the pressure relief opening of each battery can avoid conductive terminals of adjacent batteries as much as possible, which reduces the probability of short-circuiting of the conductive terminals of the adjacent batteries caused by the thermal runaway gas, thereby reducing the probability of thermal runaway spreading to the adjacent batteries.

A third aspect of the embodiments of this disclosure provides an electric apparatus, including:
an apparatus body; and
any one of the foregoing battery packs, where the battery pack is mounted on the apparatus body to supply power to the apparatus body.

A fourth aspect of the embodiments of this disclosure provides a battery module including at least two of the foregoing batteries, where at least two of the batteries are sequentially arranged, conductive terminals of the at least two sequentially arranged batteries have the same orientation, and the orientation of the conductive terminals of the at least two sequentially arranged batteries is arranged crosswise relative to a direction in which the at least two batteries are sequentially arranged.

In the embodiments of this disclosure, in the at least two sequentially arranged batteries, the pressure relief opening of each battery can avoid the conductive terminal of each battery as much as possible, such that the thermal runaway gas ejected from the pressure relief opening of each battery can avoid conductive terminals of adjacent batteries as much as possible, which reduces the probability of short-circuiting of the conductive terminals of the adjacent batteries caused by the thermal runaway gas, thereby reducing the probability of thermal runaway spreading to the adjacent batteries.

### Invention effects:

In the battery of the embodiments of this disclosure, when thermal runaway occurs in the battery cell within the wrapping structure of the battery, since a side of the wrapping structure forms the pressure relief opening communicating with the accommodating space, and the resistance to the escape of the generated thermal runaway gas from other parts of the wrapping structure except the pressure relief opening is large, the thermal runaway gas is difficult to flow out of the wrapping structure from other parts of the wrapping structure except the pressure relief opening, and the wrapping structure guides the thermal runaway gas to be ejected from the wrapping structure through the pressure relief opening to relieve pressure in the accommodating space of the wrapping structure, achieving directional ejection of the thermal runaway gas. Since the conductive terminal and the pressure relief opening are located on different sides of the wrapping structure, the thermal runaway gas ejected from the pressure relief opening and substances carried by the thermal runaway gas can be kept as far away as possible from the conductive terminal.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments, and should not be construed as any limitation on this disclosure. Moreover, throughout the accompanying drawings, the same reference signs represent the same parts. In the accompanying drawings:
FIG. 1 is a schematic structural diagram of a battery according to an embodiment of this disclosure, showing an inlet and outlet of a temperature regulating container extending out of an accommodating space;
FIG. 2 is a schematic structural diagram of a battery according to an embodiment of this disclosure, showing a conductive terminal;
FIG. 3 is an exploded view of a battery according to an embodiment of this disclosure;
FIG. 4 is an assembly diagram of a housing and an insulating layer according to an embodiment of this disclosure;
FIG. 5 is a schematic diagram of position A-A in FIG. 4;
FIG. 6 is an enlarged view of position B in FIG. 5;
FIG. 7 is an arrangement diagram of a temperature regulating container and battery cells according to an embodiment of this disclosure;
FIG. 8 is a schematic structural diagram of a temperature regulating container according to an embodiment of this disclosure;
FIG. 9 is an assembly diagram of a top cover and a housing according to an embodiment of this disclosure; and
FIG. 10 is an arrangement diagram of at least two sequentially arranged batteries according to an embodiment of this disclosure.

### Description of reference signs:

1. wrapping structure; 11. accommodating space; 12. pressure relief opening; 13. housing; 131. bending plate; 14. top cover; 141. flange; 15. insulating layer; 2. conductive terminal; 21. adapting electrode; 22. sampling electrode; 3. battery cell; 31. tab; 4. flame-retardant cover; 41. indentation; 42. through hole; 5. temperature regulating container; 51. temperature regulating cavity; 52. inlet; 53. outlet; 54. container body; 55. first fluid guiding plate; 56. second fluid guiding plate; 6. reinforcing plate; and 100. battery.

### DESCRIPTION OF EMBODIMENTS

The following describes in detail the embodiments of technical solutions of this disclosure with reference to the accompanying drawings. The following embodiments are merely used to describe technical solutions of this disclosure more explicitly, and therefore they are merely used as examples and do not constitute any limitations on the protection scope of this disclosure.

Unless otherwise defined, all technical and scientific terms used herein shall have the same meanings as commonly understood by persons skilled in the art to which this disclosure relates. The terms used herein are intended to merely describe the specific embodiments rather than to limit this disclosure. The terms "include", "comprise", and "have" and any other variations in the embodiments of this disclosure are intended to cover non-exclusive inclusions.

In the description of the embodiments of this disclosure, the technical terms "first", "second", "third", and the like are merely intended to distinguish between different objects, and shall not be understood as any indication or implication of relative importance or any implicit indication of the number, specific sequence, or primary-secondary relationship of the technical features indicated. In the description of the embodiments of this disclosure, "a plurality of" means more than two, unless otherwise specifically defined.

In this specification, reference to "embodiment" means that specific features, structures, or characteristics described with reference to the embodiment may be incorporated in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this disclosure, unless otherwise specified and defined explicitly, the technical terms "mounting", "connection", "join", and "fixation" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this disclosure as appropriate to specific situations.

In the description of the embodiments of this disclosure, unless otherwise specified and defined explicitly, the technical term "contact" should be understood in a general sense, and may refer to direct contact, contact via an intermediate medium layer, contact between two objects in contact with basically no interaction force, or contact between two objects in contact with an interaction force.

In the related art, when thermal runaway occurs in a battery, thermal runaway gas of the battery is ejected in all directions which are uncertain, and there is no structure in the battery to guide the thermal runaway gas to be directionally ejected in a preset direction.

In the embodiments of this disclosure, a pressure relief opening is provided on a wrapping structure, and the wrapping structure guides thermal runaway gas of a battery cell in an accommodating space to be directionally ejected from the pressure relief opening in a preset direction, that is, a direction of a side of the wrapping structure facing the pressure relief opening, such that the ejection direction of the thermal runaway gas of the battery can be set based on actual needs.

The battery provided in the embodiments of this disclosure may be used without limitation in electric apparatuses such as energy storage power systems, vehicles, ships, or aircrafts.

A plurality of batteries provided in the embodiments of this disclosure may also be used in groups as a battery pack. The battery pack may also be used without limitation in electric apparatuses such as energy storage power systems, vehicles, ships, or aircrafts. Using a battery pack can provide higher total energy. Moreover, the battery pack is formed by placing a plurality of grouped batteries in a sealed box, achieving more reliable dustproof and waterproof performance. Therefore, the battery pack can be applied in harsher usage environments, including humid or even submerged scenarios.

The battery cell may be provided in one or plurality, and the plurality of battery cells may be connected in series, parallel, or series-parallel, where being connected in series-parallel means that the plurality of battery cells are connected in both series and parallel. The plurality of battery cells may be directly connected in series, parallel, or series-parallel to form a battery pack. Certainly, the plurality of battery cells may be connected in series, parallel, or series-parallel to form a battery module first, and then a plurality of battery modules are connected in series, parallel, or series-parallel to form a battery pack. The battery pack may further include other structures. For example, the battery pack may further include a busbar configured to implement electrical connection between the plurality of battery cells.

The battery cell is a unit that can achieve mutual conversion between chemical energy and electrical energy.

In the embodiments of this disclosure, the battery cell may be a secondary battery. The secondary battery is a battery cell that can be charged after being discharged, to activate active materials for continuous use.

In the embodiments of this disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which is not limited in the embodiments of this disclosure.

An embodiment of this disclosure provides an electric apparatus that includes the foregoing battery or battery pack for supplying electrical energy. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

The electric apparatus in the embodiments of this disclosure includes an apparatus body and a battery pack, where the battery pack is mounted on the apparatus body to supply power to the apparatus body.

In the embodiments of this disclosure, the battery pack is used to supply power to the apparatus body, such that the apparatus body obtains the electrical energy required for normal operation.

The battery pack in the embodiments of this disclosure includes a box and a battery 100, where the battery 100 is located in the box.

In the embodiments of this disclosure, the battery 100 is located in the box, the box and the battery 100 in the box supply power externally as a whole, and the box can better protect the battery 100 in the box.

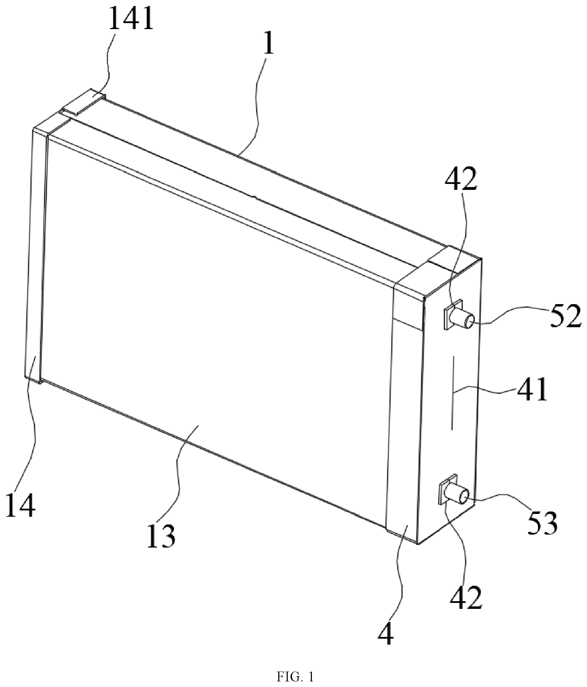

The battery 100 in the embodiments of this disclosure, referring to FIGs. 1 to 3, includes a wrapping structure 1, a conductive terminal 2, and a battery cell 3. The wrapping structure 1 forms an accommodating space 11, a side of the wrapping structure 1 forming a pressure relief opening 12 communicating with the accommodating space 11, and the rest of the wrapping structure 1 being a sealing structure. The conductive terminal 2 is connected to the wrapping structure 1, the conductive terminal 2 and the pressure relief opening 12 being located on different sides of the wrapping structure 1. The battery cell 3 is located in the accommodating space 11, a tab 31 of the battery cell 3 being electrically connected to the conductive terminal 2.

The wrapping structure 1 is a structure that envelops the battery cell 3, and the accommodating space 11 of the wrapping structure 1 is mainly used to accommodate the battery cell 3.

The conductive terminal 2 is electrically connected to the tab 31 of the battery cell 3, such that the battery cell 3 supplies power externally through the conductive terminal 2, or an external power source supplies power to the battery cell 3 through the conductive terminal 2.

For example, the conductive terminal 2 is a busbar. A plurality of batteries 100 in the battery pack are connected in series, parallel, or series-parallel through the busbar.

For example, the battery cell 3 includes a jelly roll and an outer package covering the jelly roll for protecting the jelly roll. The jelly roll includes a positive electrode plate, a negative electrode plate, and a separator located between the positive electrode plate and the negative electrode plate.

A side of the wrapping structure 1 forms the pressure relief opening 12 communicating with the accommodating space 11, and the rest of the wrapping structure 1 is a sealing structure, meaning that other parts of the wrapping structure 1 enveloping the battery cell 3 except the pressure relief opening 12 are basically sealed. That is, other parts of the wrapping structure 1 enveloping the battery cell 3 except the pressure relief opening 12 can be completely sealed or not completely sealed. In a case that other parts of the wrapping structure 1 enveloping the battery cell 3 except the pressure relief opening 12 are not completely sealed, a gap at the position where the wrapping structure 1 is not completely sealed only needs to inhibit the ejection of thermal runaway gas from the position where the wrapping structure 1 is not completely sealed to some extent, such that the thermal runaway gas is guided to be ejected from the pressure relief opening 12.

The conductive terminal 2 and the pressure relief opening 12 are located on different sides of the wrapping structure 1, such that the thermal runaway gas ejected from the pressure relief opening 12 can be kept as far away as possible from the conductive terminal 2.

For example, the battery cell 3 within the wrapping structure 1 may be provided in one or at least two.

In the embodiments of this disclosure, when thermal runaway occurs in the battery cell 3 within the wrapping structure 1 of the battery 100, since a side of the wrapping structure 1 forms the pressure relief opening 12 communicating with the accommodating space 11, and the resistance to the escape of the generated thermal runaway gas from other parts of the wrapping structure 1 except the pressure relief opening 12 is large, the thermal runaway gas is difficult to flow out of the wrapping structure 1 from other parts of the wrapping structure 1 except the pressure relief opening 12, and the wrapping structure 1 guides the thermal runaway gas to be ejected from the wrapping structure 1 through the pressure relief opening 12 to relieve pressure in the accommodating space 11 of the wrapping structure 1, achieving directional ejection of the thermal runaway gas. Since the conductive terminal 2 and the pressure relief opening 12 are located on different sides of the wrapping structure 1, the thermal runaway gas ejected from the pressure relief opening 12 and substances carried by the thermal runaway gas can be kept as far away as possible from the conductive terminal 2.

In one embodiment, the battery cell 3 is a pouch battery cell.

The outer package covering the jelly roll of the pouch battery cell for protecting the jelly roll is a plastic encapsulation film.

For example, the plastic encapsulation film is an aluminum-plastic film.

In the embodiments of this disclosure, when thermal runaway occurs in the battery cell 3, the thermal runaway gas generated by the jelly roll breaks through the plastic encapsulation film and is ejected in all directions, and the thermal runaway gas is directionally ejected from the pressure relief opening 12 under the guidance of the wrapping structure 1.

It can be understood that the battery cell 3 is not limited to a pouch battery cell. For example, the battery cell 3 may be a hard-shell battery cell 3, and the outer package covering the jelly roll of the hard-shell battery cell 3 is a metal shell or a plastic shell.

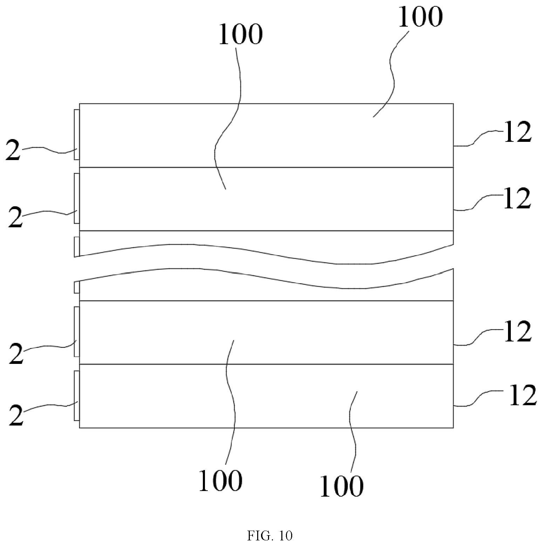

In one embodiment, referring to FIG. 10, the battery 100 in the box of the battery pack is provided in a quantity of at least two, at least two of the batteries 100 are sequentially arranged, conductive terminals 2 of the at least two sequentially arranged batteries 100 have the same orientation, and the orientation of the conductive terminals 2 of the at least two sequentially arranged batteries 100 is arranged crosswise relative to a direction in which the at least two batteries 100 are sequentially arranged.

The orientation of the conductive terminal 2 of the battery 100 is the direction of a side of the wrapping structure 1 of the battery 100 facing the conductive terminal 2.

For example, referring to FIG. 10, in the at least two sequentially arranged batteries 100, the orientation of the conductive terminal 2 is perpendicular to the direction in which the at least two batteries 100 are sequentially arranged.

In the embodiments of this disclosure, since the conductive terminal 2 and the pressure relief opening 12 are located on different sides of the wrapping structure 1, the conductive terminals 2 of the at least two sequentially arranged batteries 100 have the same orientation, and the orientation of the conductive terminals 2 of the at least two sequentially arranged batteries 100 is arranged crosswise relative to the direction in which the at least two batteries 100 are sequentially arranged, the pressure relief openings 12 of the at least two sequentially arranged batteries 100 can avoid the conductive terminals 2 of the at least two sequentially arranged batteries 100, which reduces the probability of short-circuiting of conductive terminals 2 of adjacent batteries 100 caused by the thermal runaway gas ejected from the pressure relief opening 12 of any of the at least two sequentially arranged batteries 100, helping to suppress the spread of thermal runaway of the battery 100 to the adjacent batteries.

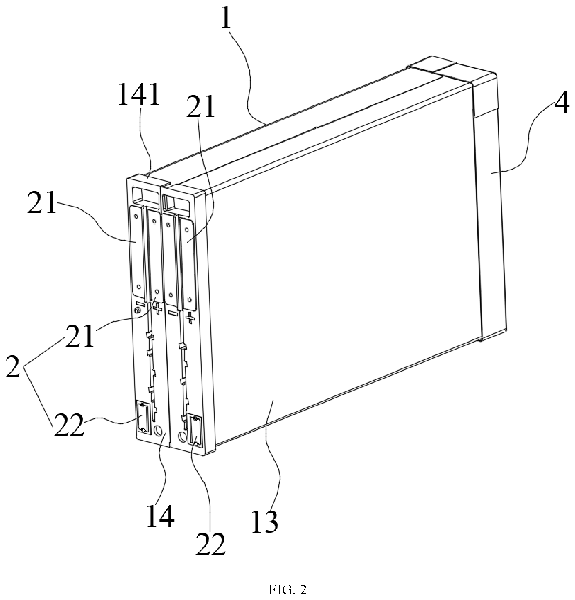

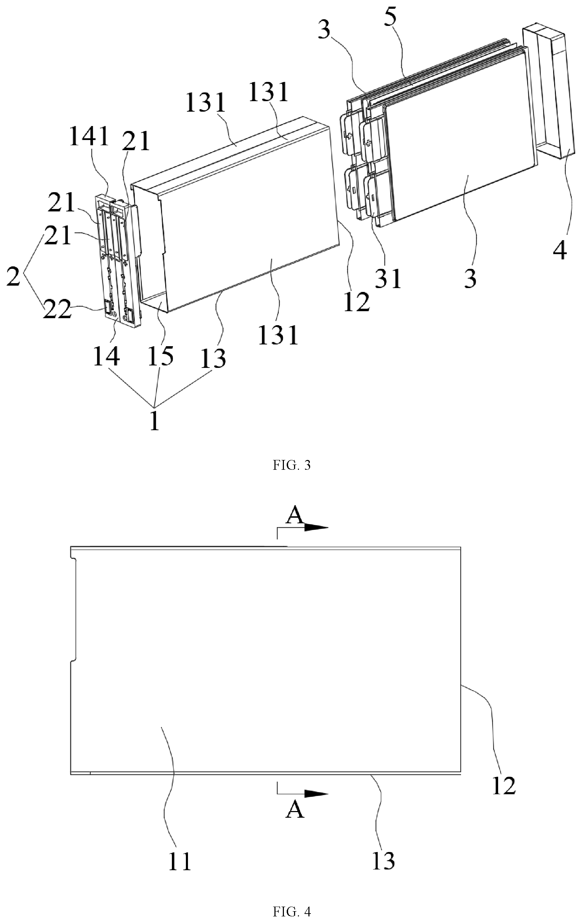

In one embodiment, referring to FIGs. 2 and 3, the battery cell 3 in the battery 100 is provided in a quantity of at least two, and the conductive terminal 2 includes a sampling electrode 22 and at least two adapting electrodes 21, where one adapting electrode 21 is electrically connected to a tab 31 of one battery cell 3, the other adapting electrode 21 is electrically connected to a tab 31 of the other battery cell 3, the tabs 31 corresponding to the two adapting electrodes 21 having opposite polarities, and the sampling electrode 22 is electrically connected to the tabs 31 of the two corresponding battery cells 3 separately, the tabs 31 of the two corresponding battery cells 3 electrically connected to the sampling electrode 22 having opposite polarities.

The tabs 31 corresponding to the at least two adapting electrodes 21 have opposite polarities, where the polarity of one adapting electrode 21 is positive, and that of the other adapting electrode 21 is negative. The battery cell 3 of the battery 100 can supply power externally through the adapting electrode 21, and the battery cell 3 of the corresponding battery 100 can be charged through the adapting electrode 21.

The sampling electrode 22 is electrically connected to the tabs 31 of the two corresponding battery cells 3 separately, and the tabs 31 of the two corresponding battery cells 3 electrically connected to the sampling electrode 22 have opposite polarities. Each sampling electrode 22 is electrically connected to the positive tab 31 of one battery cell 3 and the negative tab 31 of the other battery cell 3 separately, such that the battery cells 3 of the battery 100 are connected in series through the sampling electrode 22.

For example, referring to FIGs. 2 and 3, the adapting electrode 21 and the sampling electrode 22 are both busbars.

In the embodiments of this disclosure, the battery cells 3 of the battery 100 are connected in series through the sampling electrode 22, and the battery cell 3 of the battery 100 can supply power externally or be charged through the adapting electrode 21. The sampling electrode 22 connects the battery cells 3 of the battery 100 in series, and the potential of the sampling electrode 22 is the potential between the two battery cells 3 connected in series. The operating state of the corresponding battery cell 3 can be identified by measuring and sampling the voltage between the sampling electrode 22 and the corresponding adapting electrode 21. Since the conductive terminal 2 and the pressure relief opening 12 are located on different sides of the wrapping structure 1, the thermal runaway gas ejected from the pressure relief opening 12 can avoid the adapting electrode 21 and the sampling electrode 22 as much as possible.

In one embodiment, referring to FIGs. 1 to 3, the battery 100 further includes a flame-retardant cover 4 covering the pressure relief opening 12, a pressure bearing capacity of the wrapping structure 1 being greater than that of the flame-retardant cover 4.

The pressure bearing capacity refers to the capacity of withstanding a fluid pressure.

The relative magnitude of the pressure bearing capacity can be measured by filling gas into the wrapping structure 1. Specifically, since the flame-retardant cover 4 covers the pressure relief opening 12, the wrapping structure 1 and the flame-retardant cover 4 basically seal the accommodating space 11. When the gas is filled into the accommodating space 11, the air pressure in the accommodating space 11 continuously increases, and the gas pressure borne by the wrapping structure 1 and the flame-retardant cover 4 continuously increases. During the process of continuously filling the gas into the accommodating space 11, the flame-retardant cover 4 is damaged before the wrapping structure 1, that is, the pressure bearing capacity of the flame-retardant cover 4 is less than that of the wrapping structure 1, and the bearing capacity of the wrapping structure 1 is greater than that of the flame-retardant cover 4.

The flame-retardant cover 4 has a certain flame-retardant capacity. When thermal runaway occurs in the battery 100, the flame-retardant cover 4 may deform due to high temperature but is basically not ignited.

In the embodiments of this disclosure, the flame-retardant cover 4 covers the pressure relief opening 12, and the flame-retardant cover 4 has a certain flame-retardant capacity, which can reduce the probability of the flame-retardant cover 4 being ignited to some extent when thermal runaway occurs in the battery 100. The flame-retardant cover 4 covers the pressure relief opening 12, which can prevent the thermal runaway gas generated by an adjacent battery 100 from entering the accommodating space 11 through the pressure relief opening 12 when thermal runaway occurs in the adjacent battery 100, helping to suppress the spread of thermal runaway to some extent. When thermal runaway occurs in the battery cell 3 in the accommodating space 11, since the bearing capacity of the wrapping structure 1 is greater than that of the flame-retardant cover 4, the thermal runaway gas in the accommodating space 11 first breaks through the flame-retardant cover 4, causing the thermal runaway gas in the accommodating space 11 to be directionally ejected from the pressure relief opening 12.

In one embodiment, referring to FIGs. 1 to 3, the flame-retardant cover 4 may be made of mica.

For example, the flame-retardant cover 4 is mica paper.

For example, the mica paper is bonded to the wrapping structure 1.

In the embodiments of this disclosure, the flame-retardant cover 4 is made of mica, which has a certain flame-retardant capacity and is basically not ignited when thermal runaway occurs in the battery 100. A thin flame-retardant cover 4 made of mica can have a small pressure bearing capacity.

In one embodiment, referring to FIG. 1, an indentation 41 may be formed on the flame-retardant cover 4.

For example, referring to FIGs. 1, 3, and 4, the indentation 41 is located in an area corresponding to the pressure relief opening 12.

In the embodiments of this disclosure, providing the indentation 41 on the flame-retardant cover 4 can reduce the pressure bearing capacity of the flame-retardant cover 4, such that the thermal runaway gas in the accommodating space 11 can break through the flame-retardant cover 4 and be ejected from the pressure relief opening 12 when thermal runaway occurs in the battery cell 3 in the accommodating space 11 of the wrapping structure 1.

In one embodiment, referring to FIG. 1, the flame-retardant cover 4 forms a through hole 42 communicating with the accommodating space 11.

The through hole 42 on the flame-retardant cover 4 penetrates the flame-retardant cover 4.

In the embodiments of this disclosure, some structures in the accommodating space 11 of the wrapping structure 1 need to extend out of the accommodating space 11. These structures extend out of the accommodating space 11 from the through hole 42 of the flame-retardant cover 4, and the position where the flame-retardant cover 4 covers is the pressure relief opening 12 for pressure relief. Therefore, even if some structures in the accommodating space 11 extend from the through hole 42, the through hole 42 does not need to be sealed, which is conducive to simplifying the structure of the battery 100.

In one embodiment, referring to FIGs. 3, 7, and 8, the battery 100 further includes a temperature regulating container 5 partially located in the accommodating space 11, where one side or two opposite sides of the temperature regulating container 5 are provided with the battery cell 3, the temperature regulating container 5 has a temperature regulating cavity 51 and an inlet 52 and an outlet 53 communicating with the temperature regulating cavity 51 separately, and the temperature regulating container 5 passes through the through hole 42 such that the inlet 52 and the outlet 53 are both exposed outside the accommodating space 11 along a side of the wrapping structure 1 facing the flame-retardant cover 4.

The battery cell 3 generates heat during operation, and also generates a large amount of heat in the case of thermal runaway. A fluid enters the temperature regulating cavity 51 of the temperature regulating container 5 through the inlet 52 of the temperature regulating container 5 and flows out of the temperature regulating cavity 51 from the outlet 53 of the temperature regulating container 5, and the temperature of the battery cell 3 is regulated by the fluid flowing into and out of the temperature regulating cavity 51.

For example, the fluid flowing through the temperature regulating cavity 51 of the temperature regulating container 5 may be liquid or gas.

For example, a low-temperature liquid or gas is introduced into the temperature regulating cavity 51 to cool the battery cell 3.

For example, the temperature regulating container 5 may be an air bag.

For example, the air bag may be made of rubber.

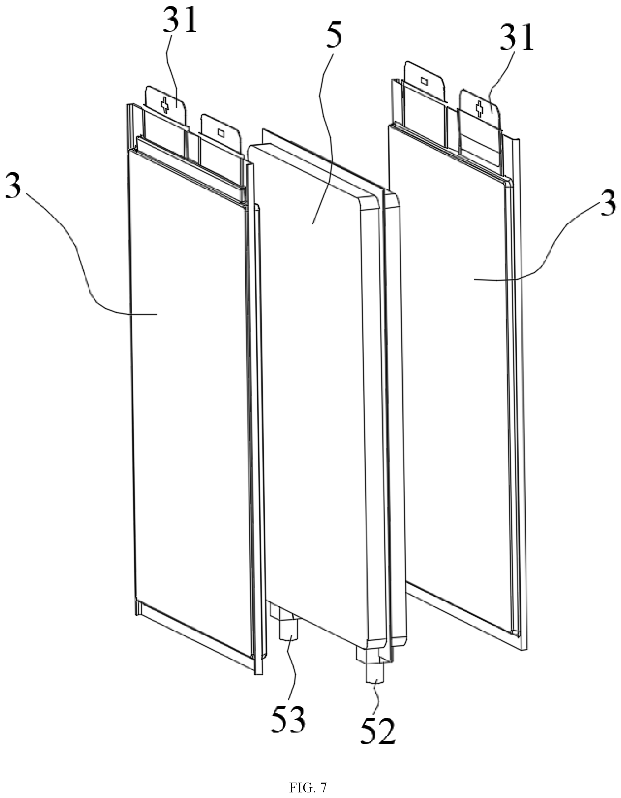

For example, referring to FIGs. 3 and 7, the battery cells 3 are provided on two opposite sides of the temperature regulating container 5.

For example, referring to FIG. 3, the number of battery cells 3 on each side is two, and the two battery cells 3 on each side are connected in series through the sampling electrode 22.

For example, referring to FIG. 7, the number of battery cells 3 on each side is one.

For example, the number of battery cells 3 on each side is one, and the two battery cells 3 located on two sides of the temperature regulating container 5 respectively are connected in series through the sampling electrode 22.

In the embodiments of this disclosure, the inlet 52 and the outlet 53 of the temperature regulating container 5 pass through the through hole 42 of the flame-retardant cover 4 and extend out of the accommodating space 11, facilitating the connection of the temperature regulating container 5 to an external fluid source through the inlet 52 and the outlet 53, such that the external fluid can enter the temperature regulating container 5 through the inlet 52 and flow out through the outlet 53 to regulate the temperature of the battery cell 3. The inlet 52 and the outlet 53 of the temperature regulating container 5 pass through the through hole 42 of the flame-retardant cover 4 and extend out of the accommodating space 11, so the through hole 42 does not need to be sealed, which is conducive to simplifying the structure of the battery 100.

It can be understood that what extends out of the accommodating space 11 of the wrapping structure 1 from the through hole 42 of the flame-retardant cover 4 is not necessarily the temperature regulating container 5, but may also be other structures partially located in the accommodating space 11 of the wrapping structure 1 depending on the situation.

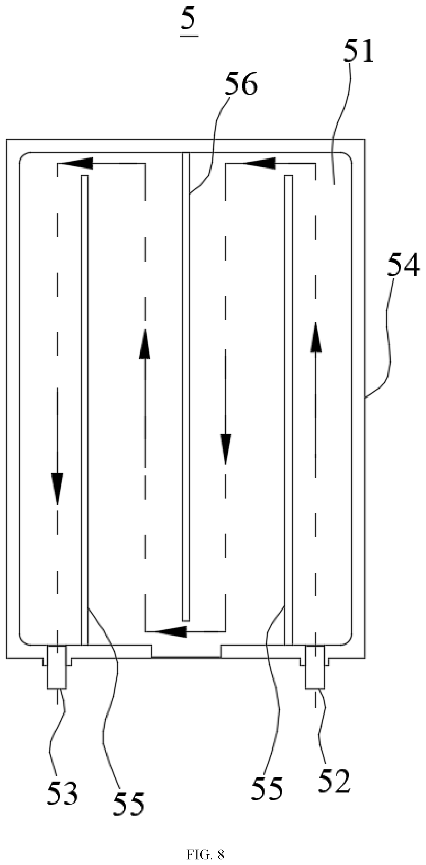

In one embodiment, referring to FIG. 8, the temperature regulating container 5 includes a container body 54, a first fluid guiding plate 55, and a second fluid guiding plate 56. The temperature regulating cavity 51, the inlet 52, and the outlet 53 are all formed in the container body 54. One end of the container body 54 facing the pressure relief opening 12 is a target end, and the outlet 53 and the inlet 52 are both located at the target end of the container body 54. The first fluid guiding plate 55 is located in the temperature regulating cavity 51, the first fluid guiding plate 55 is connected to a cavity wall of the temperature regulating cavity 51 facing the target end, the first fluid guiding plate 55 is spaced apart from a cavity wall of the temperature regulating cavity 51 facing away from the target end, the first fluid guiding plate 55 is provided in plurality, and the plurality of first fluid guiding plates 55 are located between the outlet 53 and the inlet 52. The second fluid guiding plate 56 is located in the temperature regulating cavity 51, the second fluid guiding plate 56 is spaced apart from the cavity wall of the temperature regulating cavity 51 facing the target end, the second fluid guiding plate 56 is connected to the cavity wall of the temperature regulating cavity 51 facing away from the target end, and the second fluid guiding plate 56 is located between the first fluid guiding plate 55 closest to the outlet 53 and the first fluid guiding plate 55 closest to the inlet 52.

The container body 54 is mainly used to accommodate the fluid that can regulate the temperature.

The first fluid guiding plate 55 and the second fluid guiding plate 56 are used to guide the fluid to flow in the temperature regulating cavity 51.

In the embodiments of this disclosure, the first fluid guiding plate 55 is connected to the cavity wall of the cooling cavity facing the target end, the first fluid guiding plate 55 is spaced apart from the cavity wall of the cooling cavity facing away from the target end, the second fluid guiding plate 56 is spaced apart from the cavity wall of the cooling cavity facing the target end, the second fluid guiding plate 56 is connected to the cavity wall of the cooling cavity facing away from the target end, and the second fluid guiding plate 56 is located between the first fluid guiding plate 55 closest to the outlet 53 and the first fluid guiding plate 55 closest to the inlet 52, such that the first fluid guiding plate 55 and the second fluid guiding plate 56 are distributed in a staggered state in the accommodating space 11. The fluid entering the temperature regulating cavity 51 from the inlet 52 flows through a long path under the guidance of the first fluid guiding plate 55 and the second fluid guiding plate 56 and then flows out from the outlet 53, helping the fluid to fully regulate the temperature in the temperature regulating cavity 51.

It can be understood that the first fluid guiding plate 55 and the second fluid guiding plate 56 may not be provided in the temperature regulating cavity 51 depending on the situation.

In one embodiment, ignition points of the flame-retardant cover 4 and the wrapping structure 1 are both greater than or equal to 800°C.

For example, the ignition point of the flame-retardant cover 4 may be 800°C, 810°C, 860°C, 900°C, or the like.

For example, the ignition point of the flame-retardant cover 4 can be measured by heating the flame-retardant cover 4 to the state in which it just ignites.

For example, the ignition point of the wrapping structure 1 can be measured by heating the wrapping structure 1 to the state in which it just ignites.

In the embodiments of this disclosure, the ignition points of the flame-retardant cover 4 and the wrapping structure 1 are relatively high, so even under the influence of thermal runaway gas at high temperature, the flame-retardant cover 4 and the wrapping structure 1 are basically not ignited.

In one embodiment, referring to FIGs. 1 to 3 and 9, the wrapping structure 1 includes a housing 13 and a top cover 14. The pressure relief opening 12 of the housing 13 is formed on a side of the housing 13. The top cover 14 and the housing 13 enclose the accommodating space 11, and the conductive terminal 2 is mounted on the top cover 14.

For example, the mica paper is bonded to the housing 13.

In the embodiments of this disclosure, before the top cover 14 is mounted on the housing 13, the conductive terminal 2 on the top cover 14 can be electrically connected to the tab 31 of the battery cell 3, and then the connected top cover 14, conductive terminal 2, and battery cell 3 are mounted to the housing 13, facilitating the connection of the conductive terminal 2 to the battery cell 3 before they are disposed inside the housing.

It can be understood that the wrapping structure 1 is not limited to the structure where the top cover 14 is mounted on the housing 13. For example, the wrapping structure 1 may be an integrally formed structure.

In one embodiment, referring to FIGs. 1 to 3 and 9, the top cover 14 has a flange 141 covering a side wall of the housing 13, and a gap between the flange 141 and the side wall of the housing 13 is less than or equal to 0.5 mm.

For example, the gap between the flange 141 and the side wall of the housing 13 may be 0.5 mm, 0.4 mm, 0.3 mm, 0.2 mm, or 0.1 mm.

For example, before the top cover 14 is connected to the housing 13 after being mounted into the housing 13, the size between the flange 141 and the side wall of the housing 13 can be measured using a plug gauge, vernier caliper, or micrometer.

For example, the span of the flange 141 of the top cover 14 and the size of the housing 13 corresponding to the span can be measured separately using a vernier caliper or micrometer, and half of the difference between the two values is the gap between the top cover 14 and the housing 13.

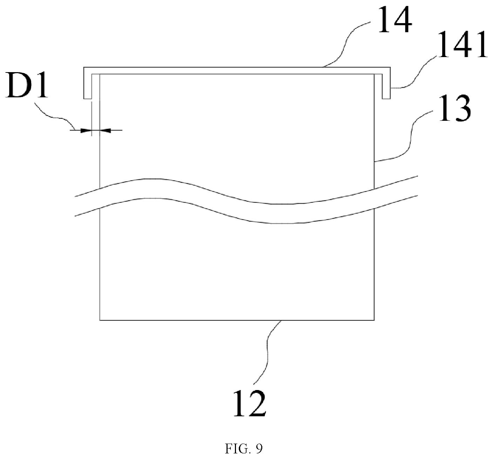

For example, referring to FIG. 9, the gap between the flange 141 and the side wall of the housing 13 is D1, where D1 ≤ 0.5 mm.

In the embodiments of this disclosure, the gap between the flange 141 and the side wall of the housing 13 is not completely sealed and is relatively appropriate, resulting in large resistance to the escape of the thermal runaway gas between the flange 141 and the side wall of the housing 13. This can better inhibit the ejection of the thermal runaway gas toward the top cover 14, and thus better guide the thermal runaway gas in the accommodating space 11 to be ejected from the pressure relief opening 12, helping to reduce the degree of thermal runaway in the battery 100.

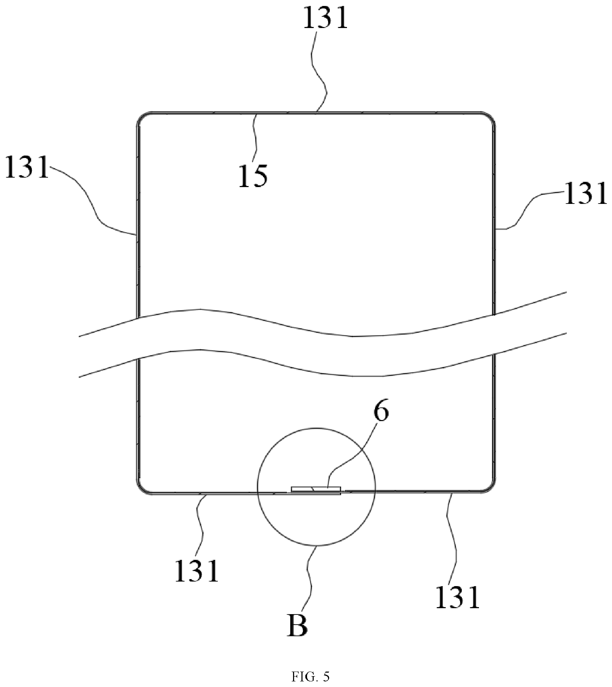

In one embodiment, referring to FIGs. 4 and 5, the housing 13 includes a plurality of sequentially bent bending plates 131, bending plates 131 on two circumferential ends of the battery cell 3 are connected, the plurality of bending plates 131 enclose the pressure relief opening 12, the top cover 14 and the pressure relief opening 12 are located on two opposite sides of the housing 13 respectively, the top cover 14 and the plurality of bending plates 131 enclose the accommodating space 11, and the wrapping structure 1 further includes an insulating layer 15, the insulating layer 15 covering an inner surface of the housing 13.

The housing 13 includes a plurality of bending plates 131, and the housing 13 is formed by bending a single plate multiple times and then connecting the bending plates 131 on two ends. The state of the housing 13 before bending is the unfolded state.

For example, the insulating layer 15 covers the housing 13 by hot pressing.

For example, the insulating layer 15 is coated on the housing 13.

In the embodiments of this disclosure, the housing 13 is substantially flat in the unfolded state. The insulating layer 15 can first cover the housing 13 in the unfolded state, and then the housing 13 and the insulating layer 15 are bent together. After the housing 13 is bent and formed, the insulating layer 15 covers the inner surface of the housing 13. The insulating layer 15 covering the housing 13 in the unfolded state leads to relatively convenient mounting of the insulating layer 15 on the housing 13.

In one embodiment, referring to FIGs. 4 and 5, the housing 13 is made of metal, and the battery 100 further includes a reinforcing plate 6, where the reinforcing plate 6 is located on the inner surface of the housing 13, the bending plates 131 on two circumferential ends of the battery cell 3 are connected by welding, a position at which the bending plates 131 on two circumferential ends of the battery cell 3 are welded is a target position, and the reinforcing plate 6 is welded to the housing 13 at the target position.

It should be noted that the reinforcing plate 6 is welded to the housing 13, and the reinforcing plate 6 is made of a material that can be welded to the housing 13.

For example, the housing 13 and the reinforcing plate 6 are both made of metal.

In the embodiments of this disclosure, the reinforcing plate 6 is welded to the housing 13 at the target position, such that the housing 13 and the reinforcing plate 6 are welded together. The reinforcing plate 6 supports the housing 13 at the target position, reducing the probability of the bending plates 131 on two ends of the housing 13 being welded through during welding.

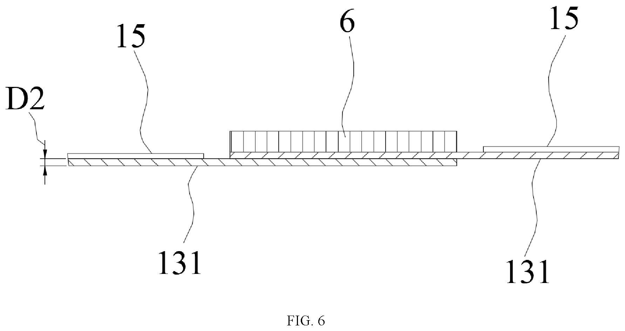

In one embodiment, referring to FIG. 6, the housing 13 is made of metal, and thickness of the housing 13 is 0.1 mm to 1 mm.

For example, referring to FIG. 6, the thickness of the housing 13 is D2, where 0.1 mm ≤ D2 ≤ 1 mm.

For example, the thickness of the housing 13 may be 0.1 mm, 0.2 mm, 0.3 mm, 0.4 mm, 0.5 mm, 0.8 mm, or 1 mm.

In the embodiments of this disclosure, the thickness of the metal housing 13 is relatively appropriate, making the housing 13 have light weight with basically sufficient bearing capacity.

In one embodiment, referring to FIG. 6, the housing 13 is made of plastic, the housing 13 is an integrally formed structure, and thickness of the housing 13 is 1 mm to 3 mm.

For example, referring to FIG. 6, the thickness of the housing 13 is D2, where 1 mm ≤ D2 ≤ 3 mm.

For example, referring to FIG. 6, the thickness of the housing 13 may be 1 mm, 1.2 mm, 1.5 mm, 1.8 mm, 2 mm, 2.3 mm, 2.6 mm, 2.9 mm, or 3 mm.

In the embodiments of this disclosure, the thickness of the plastic housing 13 is relatively appropriate, making the housing 13 have light weight with basically sufficient bearing capacity.

In one embodiment, referring to FIGs. 1 to 3, the top cover 14 is made of plastic, and the housing 13 is made of metal or plastic.

In one embodiment, referring to FIGs. 1 to 3, the top cover 14 is made of plastic, the housing 13 is made of metal or plastic, and the flame-retardant cover 4 is made of mica.

For example, the housing 13 may be made of metal such as steel, aluminum, aluminum alloy, copper, or copper alloy.

For example, the aluminum alloy may be aluminum-magnesium alloy.

For example, the top cover 14 may be made of engineering plastic such as polypropylene or polyethylene.

In the embodiments of this disclosure, the plastic top cover 14 has a certain pressure bearing capacity, and the plastic housing 13 or the metal housing 13 has a certain pressure bearing capacity.

It can be understood that the material of the flame-retardant cover is not limited to mica. For example, the flame-retardant cover may be made of glass fiber.

In one embodiment, referring to FIGs. 1 to 3, the conductive terminal 2 and the pressure relief opening 12 are located on two opposite sides of the wrapping structure 1 respectively.

In the embodiments of this disclosure, since the conductive terminal 2 and the pressure relief opening 12 are located on two opposite sides of the wrapping structure 1 respectively, the conductive terminal 2 can be kept as far away as possible from the pressure relief opening 12, and the thermal runaway gas ejected from the pressure relief opening 12 and substances carried by the thermal runaway gas can be kept away from the conductive terminal 2. Correspondingly, in the at least two sequentially arranged batteries 100, the pressure relief openings 12 of the at least two sequentially arranged batteries 100 can be kept as far away as possible from the conductive terminals 2 of the at least two sequentially arranged batteries 100, which can reduce the probability of short-circuiting of the adjacent batteries 100 caused by the thermal runaway gas ejected toward the conductive terminals 2 of the adjacent batteries 100 from the pressure relief openings 12 of the at least two sequentially arranged batteries 100, thereby minimizing the probability of thermal runaway spreading to the adjacent batteries 100.

It can be understood that the arrangement manner of the conductive terminal 2 and the pressure relief opening 12 is not limited. For example, the direction of the wrapping structure 1 facing the conductive terminal 2 and the direction of the wrapping structure 1 facing the pressure relief opening 12 are arranged crosswise.

An embodiment of this disclosure further provides a battery module, referring to FIG. 10, the battery module includes at least two batteries 100 according to any one of the foregoing embodiments, where at least two of the batteries 100 are sequentially arranged, conductive terminals 2 of the at least two sequentially arranged batteries 100 have the same orientation, and the orientation of the conductive terminals 2 of the at least two sequentially arranged batteries 100 is arranged crosswise relative to a direction in which the at least two batteries 100 are sequentially arranged.

In the embodiments of this disclosure, the conductive terminal 2 and the pressure relief opening 12 are located on different sides of the wrapping structure 1 respectively, the conductive terminals 2 have the same orientation, and the orientation of the conductive terminals 2 is arranged crosswise relative to the direction in which the batteries 100 are sequentially arranged, reducing the probability of short-circuiting of the conductive terminals 2 of the adjacent batteries 100 caused by the thermal runaway gas ejected from the pressure relief opening, thereby reducing the probability of thermal runaway spreading to the adjacent batteries 100.

In one embodiment, referring to FIGs. 1 to 9, the battery 100 includes a top cover 14, a pouch battery cell, a housing 13, and mica paper. The top cover 14 can be used to assemble the housing 13, the housing 13 includes five sequentially bent bending plates 131, and the five bending plates 131 of the housing 13 block an accommodating space 11 in four directions corresponding to the accommodating space 11. The top cover 14 is mounted on the housing 13, and the top cover 14 blocks the accommodating space 11 in a direction of the accommodating space 11 facing the top cover 14. That is, the housing 13 and the top cover 14 block the accommodating space 11 in five directions. The battery cell 3 is mounted in the housing 13, and the mica paper covers a pressure relief opening 12 of the housing 13. When thermal runaway occurs in the pouch battery cell in the housing 13, gas generated by thermal runaway and substances carried by the gas are ejected from the mica paper at the pressure relief opening 12, achieving directional ejection of the pouch battery cell. The accommodating space 11 blocked by the housing 13, the top cover 14, and the mica paper does not need to be completely sealed, provided that the gas generated by thermal runaway is guided to be directionally ejected. The mica paper is bonded to the housing 13. An indentation 41 is formed on the mica paper, and the indentation 41 is located in an area corresponding to the pressure relief opening 12 of the housing 13. The indentation 41 can form a burst point during thermal runaway. A through hole 42 for structures in the accommodating space 11 to extend out is formed on the mica paper. The top cover 14 is an injection-molded part, the conductive terminal 2 is a busbar embedded in the top cover 14, and the top cover 14 may also be embedded with other metal inserts. The top cover 14 and the housing 13 can be connected in a plurality of forms such as bonding, hot pressing, or welding. The top cover 14 and the housing 13 do not need to be completely sealed, and there may be a gap less than or equal to 0.5 mm between the top cover 14 and the housing 13 or another structure that can inhibit the ejection of thermal runaway gas between the housing 13 and the top cover 14 to some extent, to inhibit the ejection of the thermal runaway gas between the housing 13 and the top cover 14. The pouch battery cell is placed in the housing 13, and other structures than the pouch battery cell may also be placed in the housing 13. The number of cells in the housing 13 is greater than or equal to 1 and less than or equal to 4. The housing 13 is a metal housing 13 with a thickness of 0.1 mm to 1 mm, and the interior of the housing 13 is sprayed with an insulating coating or hot-pressed with an insulating layer 15.

For example, referring to FIGs. 4 and 5, the housing 13 is formed by bending a plate, the housing 13 includes a plurality of sequentially bent bending plates 131, and the bending plates 131 on two circumferential ends of the battery cell 3 are connected by welding, thereby splicing a continuous annular housing 13. The housing 13 has one weld joint, and the reinforcing plate 6 can be arranged at the weld joint position to reduce the probability of the corresponding bending plate 131 being welded through.

For example, two weld joints may alternatively be used to weld two parts of the housing 13 into an annular housing 13 at different positions respectively.

For example, the housing 13 may alternatively be integrally formed, and the housing 13 is not welded.

For example, the bending plates 131 of the housing 13 on two circumferential ends of the battery cell 3 may alternatively be formed by bonding in addition to welding.

For example, the housing 13 may be integrally formed using high-temperature resistant plastic, and the thickness of the housing 13 may be 1 mm to 3 mm.

The foregoing embodiments are merely intended for describing the technical solutions of this disclosure, but not for limiting this disclosure. Although this disclosure is described in detail with reference to the foregoing embodiments, persons of ordinary skill in the art should understand that they may still make modifications to the technical solutions described in the foregoing embodiments or make equivalent replacements to some or all of the technical features thereof, without departing from the scope of the technical solutions in the embodiments of this disclosure. All such modifications and equivalent replacements shall fall within the scope of this disclosure. In particular, as long as there is no structural conflict, the various technical features mentioned in the embodiments can be combined in any manner.

## Claims

1. A battery, comprising:
a wrapping structure forming an accommodating space, a side of the wrapping structure forming a pressure relief opening communicating with the accommodating space, and the rest of the wrapping structure being a sealing structure;
a conductive terminal connected to the wrapping structure, the conductive terminal and the pressure relief opening being located on different sides of the wrapping structure; and
a battery cell located in the accommodating space, a tab of the battery cell being electrically connected to the conductive terminal.

2. The battery according to claim 1, wherein the battery cell is provided in a quantity of at least two, and the conductive terminal comprises a sampling electrode and at least two adapting electrodes, wherein one adapting electrode is electrically connected to a tab of one battery cell, the other adapting electrode is electrically connected to a tab of the other battery cell, the tabs corresponding to the two adapting electrodes having opposite polarities, and the sampling electrode is electrically connected to the tabs of the two corresponding battery cells separately, the tabs of the two corresponding battery cells electrically connected to the sampling electrode having opposite polarities.

3. The battery according to claim 1 or 2, wherein the conductive terminal and the pressure relief opening are located on two opposite sides of the wrapping structure respectively.

4. The battery according to any one of claims 1 to 3, wherein the battery further comprises a flame-retardant cover covering the pressure relief opening, a pressure bearing capacity of the wrapping structure being greater than that of the flame-retardant cover.

5. The battery according to claim 4, wherein the flame-retardant cover is made of mica.

6. The battery according to claim 4 or 5, wherein an indentation is formed on the flame-retardant cover.

7. The battery according to any one of claims 4 to 6, wherein the flame-retardant cover forms a through hole communicating with the accommodating space, and the battery further comprises a temperature regulating container partially located in the accommodating space, wherein one side or two opposite sides of the temperature regulating container are provided with the battery cell, the temperature regulating container has a temperature regulating cavity and an inlet and an outlet communicating with the temperature regulating cavity separately, and the temperature regulating container passes through the through hole such that the inlet and the outlet are both exposed outside the accommodating space along a side of the wrapping structure facing the flame-retardant cover.

8. The battery according to any one of claims 4 to 7, wherein ignition points of the flame-retardant cover and the wrapping structure are both greater than or equal to 800°C.

9. The battery according to any one of claims 1 to 8, wherein the wrapping structure comprises:
a housing, wherein the pressure relief opening is formed on a side of the housing; and
a top cover, wherein the top cover and the housing enclose an accommodating space, and the conductive terminal is mounted on the top cover.

10. The battery according to claim 9, wherein the top cover has a flange covering a side wall of the housing, and a gap between the flange and the side wall of the housing is less than or equal to 0.5 mm.

11. The battery according to claim 9 or 10, wherein the housing comprises a plurality of sequentially bent bending plates, bending plates on two circumferential ends of the battery cell are connected, the plurality of bending plates enclose the pressure relief opening, the top cover and the pressure relief opening are located on two opposite sides of the housing respectively, the top cover and the plurality of bending plates enclose the accommodating space, and the wrapping structure further comprises an insulating layer, the insulating layer covering an inner surface of the housing.

12. The battery according to claim 11, wherein the housing is made of metal, and the battery further comprises a reinforcing plate, wherein the reinforcing plate is located on an inner surface of a housing, the bending plates on two circumferential ends of the battery cell are connected by welding, a position at which the bending plates on two circumferential ends of the battery cell are welded is a target position, and the reinforcing plate is welded to the housing at the target position.

13. The battery according to any one of claims 9 to 12, wherein the housing is made of metal, and thickness of the housing is 0.1 mm to 1 mm.

14. The battery according to any one of claims 9 to 12, wherein the housing is made of plastic, the housing is an integrally formed structure, and thickness of the housing is 1 mm to 3 mm.

15. The battery according to any one of claims 9 to 14, wherein the top cover is made of plastic, and the housing is made of metal or plastic.

16. The battery according to any one of claims 1 to 15, wherein the battery cell is a pouch battery cell.

17. A battery pack, comprising:
a box; and
the battery according to any one of claims 1 to 16, wherein the battery is located in the box.

18. The battery pack according to claim 17, wherein the battery in the box is provided in a quantity of at least two, at least two of the batteries are sequentially arranged, conductive terminals of the at least two sequentially arranged batteries have the same orientation, and the orientation of the conductive terminals of the at least two sequentially arranged batteries is arranged crosswise relative to a direction in which the at least two batteries are sequentially arranged.

19. An electric apparatus, comprising:
an apparatus body; and
the battery pack according to claim 17 or 18, wherein the battery pack is mounted on the apparatus body to supply power to the apparatus body.

20. A battery module, comprising at least two batteries according to any one of claims 1 to 16, wherein at least two of the batteries are sequentially arranged, conductive terminals of the at least two sequentially arranged batteries have the same orientation, and the orientation of the conductive terminals of the at least two sequentially arranged batteries is arranged crosswise relative to a direction in which the at least two batteries are sequentially arranged.
